(19) Europäisches Patentamt
European Patent Office
Office européen des brevets

(11) **EP 3 402 981 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **17700937.0**

(22) Anmeldetag: **13.01.2017**

(51) Int Cl.:
**F03D 7/02** (2006.01)     **F03D 17/00** (2016.01)

(86) Internationale Anmeldenummer:
**PCT/EP2017/050687**

(87) Internationale Veröffentlichungsnummer:
**WO 2017/121860 (20.07.2017 Gazette 2017/29)**

(54) **VERFAHREN ZUM BEWERTEN EINER ANSTRÖMUNG AN EINEM ROTORBLATT EINER WINDENERGIEANLAGE SOWIE VERFAHREN ZUM STEUERN EINER WINDENERGIEANLAGE UND WINDENERGIEANLAGE**

METHOD FOR EVALUATING AN INFLOW ON A ROTOR BLADE OF A WIND TURBINE, METHOD FOR CONTROLLING A WIND TURBINE, AND WIND TURBINE

PROCÉDÉ D'ÉVALUATION D'UNE INCIDENCE DU VENT SUR UNE PALE DE ROTOR D'UNE CENTRALE ÉOLIENNE AINSI QUE PROCÉDÉ POUR COMMANDER UNE CENTRALE ÉOLIENNE ET CENTRALE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2016 DE 102016100522**

(43) Veröffentlichungstag der Anmeldung:
**21.11.2018 Patentblatt 2018/47**

(73) Patentinhaber: **Wobben Properties GmbH**
**26607 Aurich (DE)**

(72) Erfinder: **NAPIERALA, Christian Frank**
**26603 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 148 088     EP-A1- 2 180 183
EP-A2- 2 075 462     WO-A1-2015/185720
US-A1- 2015 132 130

EP 3 402 981 B1

**Beschreibung**

Die vorliegende Erfindung betrifft ein Verfahren zum Bewerten einer Anströmung an einem Rotorblatt einer Windenergieanlage. Außerdem betrifft die vorliegende Erfindung ein Verfahren zum Betreiben einer Windenergieanlage. Die Erfindung betrifft auch eine Windenergieanlage.

Windenergieanlagen sind bekannt und werden vielfach aufgestellt. An manchem Standort entsteht so genannter OAM-Lärm ("Other Amplitude Modulation"). Dieser entsteht im Wesentlichen an Standorten, die besonders große Gradienten in der Windgeschwindigkeit über der Rotorkreisscheibe aufweisen. Solcher OAM-Lärm kann auch unter bestimmten atmosphärischen Bedingungen entstehen, die ebenso große Gradienten hervorrufen. Es wird davon ausgegangen, dass durch wesentlich höhere Windgeschwindigkeiten in größeren Höhen am Rotorblatt sehr große Anstellwinkel auftreten, wenn das Blatt die so genannte 12-Uhr-Position durchläuft, also senkrecht nach oben steht. Es entsteht dann eine kritische Anströmung. Besonders besteht hier die Gefahr eines Strömungsabrisses, was beispielsweise in S. Oerlemans Veröffentlichung "Effect of wind shear on amplitude modulation of wind turbine noise", DOI: 10.1260/1475-472X.14.5-6.715, diskutiert wird. Insoweit ist eine kritische Anströmung eine solche, bei der die Gefahr eines Strömungsabrisses besteht.

Übersteigt der Anstellwinkel einen gewissen kritischen Wert, kommt es spontan zu einer Ablösung der Grenzschicht, was auch starke Auswirkungen auf die Lautstärke und die Charakteristik des aeroakustischen Lärms einer Windenergieanlage hat. Wenig später, wenn das Rotorblatt die 12-Uhr-Position durchlaufen hat, nimmt der Anstellwinkel wieder ab, die Strömung legt sich wieder an das Profil an und die Intensität und die Charakteristik des Lärms ist wieder geringer bzw. "normal".

Da das nachfolgende Blatt auf eine ähnliche Atmosphäre, also ähnliche Randbedingungen trifft, kommt es wieder zu demselben Phänomen. Das wird als Modulation der Intensität des tieffrequenten Lärms mit der Blattpassagefrequenz wahrgenommen. Im Unterschied zu der Richtcharakteristik eines "normalen" Hinterkantenlärms, also eines Hinterkantenlärms, der dauerhaft auftritt, strahlt der beschriebene Ablöselärm eher dipolartig in Richtung der Rotorachse und kann so - auch bedingt durch die gesteigerte Intensität im von der Atmosphäre kaum gedämpften Tiefenfrequenzband - sehr weite Strecken wie beispielsweise über 2 km überbrücken und ist dann an Orten hörbar, an denen die Anlage normalerweise nicht wahrgenommen werden kann.

Eine Möglichkeit, diese Modulation der Intensität des tieffrequenten Lärms zu reduzieren, besteht grundsätzlich darin, den Lärmpegel generell zu reduzieren und die Windenergieanlage beispielsweise in einem gedrosselten Betrieb zu betreiben, in dem besonders auch die Leistung gedrosselt ist. Andererseits ist es grundsätzlich unerwünscht, Leistung oder Drehzahl zu drosseln und sollte daher so wenig wie möglich durchgeführt werden.

Es sind auch Verfahren bekannt, in einem Fernfeld ein OAM-Ereignis zu detektieren, um in die Regelung einzugreifen. Eine solche Detektion im Fernfeld ist aber aufwendig und kann den Lärm erst detektieren, wenn er bereits eingetreten ist.

Andere Verfahren beruhen auf einer Bestimmung des Anstellwinkels, obwohl der kritische Anstellwinkel von den Eigenschaften der Grenzschicht um das Rotorblattprofil und damit von der Beschaffenheit der Oberfläche besonders auch von Verschmutzungen abhängig ist. Hierbei ist außerdem eine besonders hohe Genauigkeit der Bestimmung der Anstellwinkel wichtig, so dass das Verfahren besonders anfällig auf Ungenauigkeiten reagieren kann.

Das Deutsche Patent- und Markenamt hat in der Prioritätsanmeldung zu vorliegender Anmeldung folgenden Stand der Technik recherchiert: DE 10 2014 210 949 A1, DE 20 2013 007 142 U1, US 2002/0134891 A1 sowie die Artikel "Effect of Airfoil Aerodynamic Loading on Trailing-Edge Noise Sources" von Stephane Moreau et al. und "Flow Features and Self-Noise of Airfoils Near Stall or in Stall" von Stephane Moreau et al. Des Weiteren sind aus dem Stand der Technik die Druckschriften EP 2 180 183 A1 sowie EP 2 075 462 A2 bekannt. EP 2 180 183 A1 bezieht sich auf ein Verfahren zum Erkennen eines Strömungsabrisses an einem Rotorblatt einer Windenergieanlage, das ein Messen eines Drucks eines das Rotorblatt entlangströmenden Fluids auf das Rotorblatt mittels eines Druckmessgeräts aufweist, das auf der Rotorblattoberfläche angeordnet ist. EP 2 075 462 A2 beschreibt ein Verfahren zum Steuern einer Windenergieanlage, das ein Erkennen einer Strömungsabrissbedingung eines Rotorblatts einer Windenergieanlage und ein Anpassen des Anstellwinkels des Rotorblatts aufweist, um den Strömungsabriss zu verringern.

Der vorliegenden Erfindung liegt somit die Aufgabe zugrunde, wenigstens eines der vorstehend beschriebenen Probleme zu adressieren. Insbesondere soll eine Lösung vorgeschlagen werden, mit der die beschriebene Modulation der Intensität des tieffrequenten Lärms, die mit der Blattpassagenfrequenz wahrgenommen wird, möglichst gut und/oder möglichst frühzeitig zu reduzieren. Zumindest soll im Vergleich zu bisher bekannten Lösungen eine alternative Lösung vorgeschlagen werden. Erfindungsgemäß wird ein Verfahren gemäß Anspruch 1 vorgeschlagen. Bei diesem Verfahren wird eine Anströmung an einem Rotorblatt bewertet und damit kann dann besonders eine kritische Anströmung, insbesondere ein drohender Strömungsabriss oder eine Ablöseneigung erkannt werden. Dazu schlägt das Verfahren vor, eine Anströmung an wenigstens einem Rotorblatt einer Windenergieanlage zu bewerten und dafür wenigstens die folgenden Schritte durchzuführen:

- Aufnehmen wenigstens eines Teils eines Druckspektrums eines Drucks, insbesondere Wanddrucks an dem Rotorblatt an wenigstens einer Messposition,

- Bestimmen wenigstens zweier charakteristischer Werte aus dem Druckspektrum,

- Bilden eines Indikatorwertes aus einer Beziehung der wenigstens zwei charakteristischen Werte zueinander und

- Bewerten in Abhängigkeit des Indikatorwertes, ob eine kritische Anströmung vorliegt.

Es wird somit zunächst wenigstens ein Teil eines Druckspektrums eines Wanddrucks an dem Rotorblatt an wenigstens einer Messposition aufgenommen. Dazu kann ein Drucksensor, insbesondere ein potentialfrei arbeitender Drucksensor, so im Bereich einer Rotorblattoberfläche angeordnet werden, dass er dort insbesondere kontinuierlich, ggf. im Rahmen der digitalen Abtastung, den Druck misst, der dort im Bereich des Rotorblatts auftritt bzw. an dem Rotorblatt an der Messposition anliegt. Dieser Druck kann auch als Wanddruck bezeichnet werden. Der Druck wird dabei qualitativ so aufgenommen, dass ein Spektrum erkennbar und auswertbar ist. Insoweit wird ein dediziertes Druck-signal aufgenommen, was anschaulich etwa dem Messen eines Geräusches durch ein Mikrofon entspricht. Letztlich ist ein Mikrofon schließlich auch ein Drucksensor und als Drucksensor kann auch ein Mikrofon verwendet werden.

Aus dem so aufgenommenen Druckspektrum, das beispielsweise in regelmäßigen Abständen mittels einer FFT ausgewertet werden kann, werden zumindest zwei charakteristische Werte bestimmt. Besonders werden wenigstens zwei charakteristische Werte unterschiedlicher Frequenzen oder Frequenzbänder bestimmt, also zwei charakteristische Werte aus zwei unterschiedlichen Frequenzbereichen des aufgenommen Druckspektrums.

Aus diesen wenigstens zwei charakteristischen Werten wird aus einer Beziehung dieser Werte zueinander ein Indikatorwert gebildet. In einem Fall kann diese Beziehung ein Verhältnis oder Quotient der beiden charakteristischen Werte zueinander sein. Es reicht dann, zwei Werte auszuwerten. Es können aber auch mehr als zwei Werte ausgewertet werden, indem diese beispielsweise frequenzabhängig gruppiert werden, insbesondere in zwei Gruppen gruppiert werden und dann diese Gruppen in Beziehung zueinander gesetzt werden bzw. zu diesen Gruppen jeweils ein charakteristischer Wert bestimmt wird und diese dann in Beziehung gesetzt werden.

Es kommt auch in Betracht, beispielsweise bei mehr als zwei Werten, mehrfach eine Beziehung jeweils zweier der Werte zueinander zu bilden, um daraus den Indikatorwert zu bilden, um ein weiteres Beispiel zu nennen.

In Abhängigkeit dieses Indikatorwertes wird dann bewertet, ob eine kritische Anströmung vorliegt. Eine kritische Anströmung, also eine kritische Anströmung an dem Rotorblatt, ist insbesondere eine solche, die zum Ablösen neigt. Es wurde erkannt, dass eine solche Ablöseneigung anhand des erfassten Geräusches erkannt werden kann. Dabei wurde auch erkannt, dass das Frequenzverhalten, also das Druckspektrum, Aufschluss über eine solche kritische Anströmung geben kann. Entsprechend kann das Druckspektrum natürlich auch Auskunft darüber geben, wenn eine Anströmung nicht kritisch ist.

Dadurch, dass die beiden charakteristischen Werte zueinander in Beziehung gesetzt werden, um den Indikatorwert zu bilden, kann eine Genauigkeit der Messung besonders hinsichtlich ihrer absoluten Amplituden eine untergeordnete Rolle spielen. Besonders kann somit für die Messaufnahme als solche eine Kalibrierung von untergeordneter Rolle sein oder sogar entbehrlich sein, sofern der Frequenzgang im betrachteten Frequenzbereich konstant oder anderweitig bekannt ist.

Vorzugsweise weisen die wenigstens zwei charakteristischen Werte einen ersten und einen zweiten Spektralwert auf, wobei der erste und zweite Spektralwert einen niedrigen bzw. einen hohen Frequenzbereich charakterisieren. Insbesondere wird das aufgenommene oder ausgewertete Druckspektrum in zwei Frequenzbereiche aufgeteilt, nämlich den niedrigen Frequenzbereich und den hohen Frequenzbereich. Beide Frequenzbereiche werden jeweils durch einen Spektralwert charakterisiert. Eine Möglichkeit der Charakterisierung könnte auch darin liegen, aus jedem der beiden Frequenzbereiche einen aufgenommenen Wert, z.B. dort jeweils aus der Mitte des jeweiligen Frequenzbereichs, zu verwenden. Werden nun diese beiden Spektralwerte in Beziehung gesetzt, indem beispielsweise ein Quotient oder eine Differenz gebildet wird, lässt dies auch einen Rückschluss auf die Beziehung und insbesondere das Verhältnis der beiden Frequenzbereiche zueinander zu.

Das Bewerten, ob eine kritische Anströmung vorliegt, erfolgt also in Abhängigkeit des Indikatorwertes und damit in Abhängigkeit der Beziehung der beiden Frequenzbereiche zueinander. Eine kritische Anströmung liegt besonders dann vor, wenn das Druckspektrum im niedrigen Frequenzbereich größer als im hohen Frequenzbereich ist. Es kann also besonders dann eine kritische Anströmung vorliegen, wenn der erste Spektralwert größer als der zweite Spektralwert ist.

Vorzugsweise ist das Druckspektrum als Leistungsdichtespektrum ausgebildet bzw. wird als Leistungsdichtespektrum untersucht und wird dabei in ein erstes und ein zweites Teilleistungsdichtespektrum unterteilt, wobei das erste Teilleistungsdichtespektrum in dem niedrigen Frequenzbereich und das zweite Teilleistungsdichtespektrum in dem hohen Frequenzbereich liegt. Dazu wird vorgeschlagen, dass die wenigstens zwei charakteristischen Werte als erster und zweiter Spektralanteil ausgebildet sind und jeweils durch Integration des ersten bzw. zweiten Teilleistungsdichtespektrums über den niedrigen bzw. hohen Frequenzbereich gebildet werden. Somit kann jeweils ein charakteristischer Wert für jedes der beiden Teilleistungsdichtespektren und damit für jeden der beiden Frequenzbereiche gebildet werden. Hierdurch fließt jeweils das gesamte betrachtete Teilleistungsdichtespektrum in den jeweiligen gebildeten charakteristischen Wert ein. Es kann somit jeweils das gesamte Teilleistungsdichtespektrum erfasst und beim Bilden des Indikatorwertes aus der Beziehung beider Spektralanteile berücksichtigt werden. Der vorbeschriebene erste und zweite Spektralwert können als erster bzw. zweiter Spektralanteil ausgebildet sein.

Gemäß einer Ausführungsform wird vorgeschlagen, dass der niedrige Frequenzbereich zwischen einer unteren und einer mittleren Frequenz liegt und der hohe Frequenzbereich zwischen der mittleren und einer oberen Frequenz liegt. Diese untere, mittlere und obere Frequenz sind jeweils vorgebbar. Durch das Vorgeben dieser Frequenzwerte können die beiden Frequenzbereiche definiert werden. Dadurch lassen sich die Frequenzbereiche so auswählen, dass sich die charakteristischen Werte, besonders der erste und zweite Spektralwert bzw. der erste und zweite Spektralanteil so ergeben, dass ihre Beziehung zueinander aussagekräftig zur Bewertung der Anströmung ist.

Vorzugsweise wird die mittlere Frequenz so eingestellt, dass das Leistungsdichtespektrum ein Maximum im niedrigen Frequenzbereich hat, wenn eine kritische Anströmung vorliegt. Beispielsweise können Versuche im Windkanal, oder auch über Simulationen, durchgeführt werden, die die Anströmung an das Rotorblatt besonders natürlich im Bereich der Messposition so verändern, dass sie zu einer kritischen Anströmung übergeht. Dabei können die Leistungsdichtespektren aufgenommen und ausgewertet werden. Dabei wird auch eine Veränderung des Maximums des Leistungsdichtespektrums aufgenommen werden und dann kann die mittlere Frequenz so eingestellt werden, dass das Leistungsdichtespektrum ein Maximum im niedrigen Frequenzbereich hat, also unterhalb dieser mittleren Frequenz liegt, wenn eine kritische Anströmung vorliegt. Insbesondere wird natürlich diese mittlere Frequenz dann so ausgewählt, dass bei einer unkritischen Anströmung das Maximum oberhalb der mittleren Frequenz liegt.

Außerdem oder alternativ wird vorgeschlagen, dass die untere, mittlere und obere Frequenz so eingestellt werden, dass der niedrige Frequenzbereich und der hohe Frequenzbereich gleich groß sind, dass also beispielsweise beide Frequenzbereiche jeweils 200 Hz abdecken, um ein Beispiel zu nennen. Besonders für die Integration der Teilleistungsspektren ist die Wahl gleich großer Frequenzbereiche eine Ausführungsform, um dadurch eine gute Vergleichbarkeit der Ergebnisse dieser Integrationen der Teilleistungsdichtespektren anzustreben. In diesem Beispiel wird eine gleichmäßige arithmetische Aufteilung zugrunde gelegt. Gemäß einer Ausführungsform kann bei der Aufteilung so, dass beide Frequenzbereiche gleich groß sind, eine logarithmische Aufteilung zugrunde gelegt werden.

Außerdem oder alternativ wird vorgeschlagen, dass die untere, mittlere und obere Frequenz in Abhängigkeit eines Verschmutzungsgrades oder Erosionsgrades des Rotorblattes eingestellt wird. Das bedeutet auch, dass nach einer bestimmten Betriebsdauer von beispielsweise einem halben Jahr, einem Jahr oder mehreren Jahren eine Veränderung der Frequenzbereiche vorgenommen werden kann, um Veränderungen durch Erosion entgegen zu wirken. Grundsätzlich liegt hier die Erkenntnis zugrunde, dass sich die Charakteristik des Leistungsdichtespektrums mit einem zunehmenden Verschmutzungsgrad des Rotorblattes verändern kann. Um dies zu berücksichtigen, können spezielle oder allgemeine Untersuchungen im Windkanal oder in einer Simulation vorgenommen werden, um solche Veränderungen des Leistungsdichtespektrums zu erfassen. Besonders wurde erkannt, dass sich auch das Maximum des Leistungsdichtespektrums verschieben kann und es entsprechend für eine möglichst gute Auswertung vorteilhaft sein kann, zumindest die mittlere Frequenz dann entsprechend zu verschieben bzw. neu zu wählen. Vorzugsweise werden die untere und obere Frequenz entsprechend auch zur Anpassung verändert.

Gemäß einer bevorzugten Ausführungsform können die untere, mittlere und obere Frequenz so gewählt werden, dass die Auswertung tolerant oder robust gegenüber einer Veränderung des Rotorblattes von einem sauberen zu einem verschmutzten Zustand sind.

Gemäß einer weiteren Ausführungsform wird vorgeschlagen, dass die untere, mittlere und obere Frequenz abhängig von Schallemissionsgrenzwerten am Aufstellungsort der Windenergieanlage eingestellt werden. Aus der Beziehung der charakteristischen Werte, besonders aus der Beziehung des ersten Spektralwertes zum zweiten Spektralwert bzw. des ersten Spektralanteils zum zweiten Spektralanteil lassen sich Schallemissionswerte der Windenergieanlage ableiten. Auch dies kann in einem Windkanal oder an einer Versuchsanlage untersucht werden. Sind solche Zusammenhänge dann erfasst worden, kann zum Einhalten jeweils geforderter Schallemissionsgrenzwerte eine Einstellung der unteren, mittleren und/oder oberen Frequenz vorgenommen werden.

Gemäß einer noch weiteren Ausführungsform wird vorgeschlagen, dass die untere, mittlere und obere Frequenz in Abhängigkeit von Schallmessungen im Bereich der Windenergieanlage eingestellt werden. Dadurch wird es möglich, diese Werte auf einfache Art und Weise besonders zu einem Testbetrieb an der jeweiligen Anlage einzustellen. Damit können faktisch jeweils konkrete Umgebungsbedingungen der betreffenden Windenergieanlage bzw. des betreffenden Aufstellungsortes berücksichtigt werden.

Gemäß einer Ausführungsform wird vorgeschlagen, dass die untere, mittlere und obere Frequenz auf die Werte 200 Hz, 400 Hz bzw. 600 Hz oder auf Werte in den entsprechenden Bereichen eingestellt werden. Die Werte von 200 Hz, 400 Hz und 600 Hz haben sich als gute Werte auch für unterschiedliche Anlagen herausgestellt. Auf die genannten drei exakten Werte kommt es aber nicht unbedingt an und so kann auch eine Einstellung in dem Bereich um die genannten drei Werte vorgenommen werden, beispielsweise jeweils in einem Intervall von $\pm$ 20 Hz um den jeweiligen Wert, oder um $\pm$ 50 Hz um den jeweiligen Wert.

Gemäß einer vorteilhaften Ausgestaltung wird vorgeschlagen, dass der Indikatorwert ein Quotient ist aus zwei der wenigstens zwei charakteristischen Werte bzw. aus dem ersten und zweiten Spektralwert bzw. aus dem ersten und zweiten Spektralanteil. Die vorgeschlagene Bewertung erfolgt dann so, dass von einer kritischen Anströmung ausgegangen wird, dass also bewertet wird, dass eine kritische Anströmung vorliegt, wenn der Indikatorwert oberhalb eines vorgebbaren Verhältnisgrenzwertes liegt. Vorzugsweise ist ein solcher Verhältnisgrenzwert größer als 1.

Durch das Bilden dieses Quotienten kommt es auf die absoluten Werte, aus denen der Quotient gebildet wird, nicht mehr bzw. weniger an. Es wird somit nur ein Verhältnis gebildet und somit im Ergebnis nur eine Charakteristik ausgewertet, aber keine absoluten Werte ausgewertet, obwohl natürlich Absolutwerte in die Berechnung einfließen. Jedenfalls kann damit auf einfache Art und Weise eine Auswertung der Charakteristik vorgenommen werden. Dem liegt die Erkenntnis zugrunde, dass besonders eine Situation, in der eine Ablöseneigung der Luftströmung vorliegt, aus einer Auswertung der Charakteristik abgeleitet werden kann.

Alternativ könnte auch einer der charakteristischen Werte mit einem absoluten Vergleichswert verglichen werden. Beispielsweise entspricht der Vergleich des Quotienten aus erstem und zweitem charakteristischen Wert mit dem Verhältnisgrenzwert einem Vergleich des ersten charakteristischen Wertes mit dem Produkt des zweiten charakteristischen Wertes mit dem Verhältnisgrenzwert und wäre somit eine äquivalente Umsetzung.

Jedenfalls lässt sich aus diesem Vergleich des Quotienten mit dem Verhältnisgrenzwert auf einfache Art und Weise eine Bewertung vornehmen, ob eine kritische Anströmung vorliegt. Besonders bevorzugt kann bei einem Quotienten > 1 von einer kritischen Anströmung und bei einem Quotienten <= 1 von einer nicht-kritischen oder normalen Anströmung ausgegangen werden. Dennoch ist es eine bevorzugte Ausführungsform, einen konkreten Verhältnisgrenzwert anzugeben, der besonders größer als 1 sein kann. Hierdurch kann eine klare und eindeutige Definition vorgenommen werden, ab wann von einer kritischen Anströmung auszugehen ist.

Solche Verhältnisgrenzwerte können auch abhängig der konkreten Windenergieanlage oder abhängig konkreter Randbedingungen vorgenommen werden. Besonders kann hier ein Verschmutzungsgrad des betreffenden Rotorblattes einfließen. Dadurch kann berücksichtigt werden, dass bei unterschiedlichen Verschmutzungsgraden auch eine unterschiedliche Ablöseneigung vorliegen kann. Die zugrunde liegenden technischen Gegebenheiten können mitunter recht kompliziert sein. Sie können dabei aber für die durchzuführende Bewertung durch die Festlegung eines entsprechenden Verhältnisgrenzwertes einfach und eindeutig umgesetzt werden. Wenn die Frequenzbereiche, um dieses Beispiel aufzugreifen, auch abhängig des Verschmutzungsgrades des Rotorblattes eingestellt werden, kann dies auf die Vorgabe des Verhältnisgrenzwertes entsprechend abzustimmen sein.

Gemäß einer weiteren Ausführungsform wird vorgeschlagen, dass die wenigstens eine Messposition im Bereich einer Rotorblatthinterkante des Rotorblattes angeordnet ist. Besonders im Bereich der Rotorblatthinterkante tritt ein Ablösen der Strömung zuerst auf, so dass auch da eine Ablöseneigung und damit eine kritische Anströmung besser detektiert werden kann. Außerdem sind die Sensoren an dieser Stelle vergleichsweise gut vor Erosionsvorgängen geschützt.

Außerdem oder alternativ wird vorgeschlagen, dass die Messposition auf der Saugseite des Rotorblattes angeordnet ist. Auch dies berücksichtigt, dass eine Ablöseneigung auf der Saugseite zu erwarten ist, zumindest bei dem hier insbesondere zugrunde liegenden Phänomen. Bei dem genannten Phänomen ist nämlich gerade bei Rotorblättern in einer so genannten 12-Uhr-Stellung mit einer höheren Windgeschwindigkeit zu rechnen, als wenn das Rotorblatt in einer 6-Uhr-Position ist, um hier zur Veranschaulichung diese beiden extremen Positionen zu nennen. Durch eine erhöhte Windgeschwindigkeit ändert sich auch der Anstellwinkel, nämlich in der Art, dass eine Ablöseneigung auf der Saugseite des Rotorblattes auftreten kann. Evtl. kann allerdings auch eine Ablösung in der 6-Uhr-Stellung auftreten, nämlich besonders an der Druckseite des Rotorblattes.

Dabei ist der Anstellwinkel der Winkel, in dem der scheinbare Wind das betreffende Rotorblattprofil anströmt. Durch Verstellen des Blattwinkels, besonders durch entsprechendes Betätigen wenigstens eines Pitchmotors, ändert sich im Ergebnis auch der Anstellwinkel. Soweit hier und nachfolgend von einer Verstellung des Anstellwinkels die Rede ist, ist darunter eine Verstellung des Blattwinkels zu verstehen, die faktisch zu einer Verstellung des Anstellwinkels führt.

Gemäß einer weiteren Ausführungsform wird vorgeschlagen, dass die Messposition in einem äußeren Bereich des Rotorblattes bezogen auf seine Längsachse angeordnet ist, insbesondere in einem Bereich von 60% bis 95% besonders 75% bis 85% von einem Anschlussbereich des Rotorblattes, also von der Rotorblattwurzel, bis zu einer Blattspitze des Rotorblattes. In diesem Bereich ist besonders mit dem beschriebenen Phänomen zu rechnen, weil hier eine hohe Bahngeschwindigkeit des Rotorblattes vorliegt, gleichzeitig aber noch ein signifikantes Profil, also insbesondere große Sehnenlänge vorliegt. Mit anderen Worten wird vorgeschlagen, die Messposition außen, aber nicht ganz außen bei der Blattspitze vorzusehen.

Vorzugsweise werden mehrere Messpositionen vorgesehen, insbesondere eine an jedem Rotorblatt oder besonders bevorzugt mehrere an jedem Rotorblatt. Besonders bei einer Messung an jedem Rotorblatt kann es vorteilhaft sein, eine Auswertung zentral in der Rotornabe vorzusehen.

Vorzugsweise wird der Indikatorwert tiefpassgefiltert, also mit einer Filterfunktion mit Tiefpasscharakter gefiltert. Aus Messdaten aus Windkanalversuchen wurde erkannt, dass der Indikatorwert sehr großen Schwankungen unterworfen sein kann, insbesondere verrauscht sein kann. Daher wird vorgeschlagen, den Indikator tiefpasszufiltern. Es wurde auch eine Messung und Auswertung untersucht, die auf Windkanalmessdaten beruht und den Einsatz einer einstufigen exponentiellen Glättung verwendet. Es hat sich gezeigt, dass damit das Rauschen und einige Ausreißer mit gutem Erfolg unterdrückt werden konnten, allerdings wird der Indikator dadurch träge, zeigt nämlich eine dynamische Sprungantwort.

Erfindungsgemäß wird zudem ein Verfahren zum Steuern einer Windenergieanlage vorgeschlagen, das eine Windenergieanlage mit einem Rotor mit wenigstens einem in seinem Blattwinkel verstellbaren Rotorblatt zugrunde legt. Insbesondere wird ein Rotor mit drei solchen Rotorblättern vorgesehen sein. Dieses Verfahren umfasst die Schritte:

- Auswerten einer Druckmessung an wenigstens einem Rotorblatt an wenigstens einer Messposition,

- Bewerten in Abhängigkeit der Auswertung der Druckmessung, ob eine kritische Anströmung am Rotorblatt vorliegt und

- Verstellen des Rotorblatts in seinem Anstellwinkel, wenn eine kritische Anströmung bewertet wurde, um die Anströmung zu verbessern.

Es wird also zumindest eine Druckmessung an wenigstens einem Rotorblatt vorgenommen und ausgewertet. Das Auswerten kann insbesondere eine Frequenzanalyse oder eine Auswertung unter Verwendung von Bandpässen mit anschließender Signalanalyse beinhalten. In Abhängigkeit der Auswertung der Druckmessung wird dann bewertet, ob eine kritische Anströmung am Rotorblatt vorliegt und darauf wird dann gegebenenfalls reagiert, indem das betreffende Rotorblatt in seinem Anstellwinkel reduziert wird, wenn nämlich eine kritische Anströmung bewertet wurde. Das Verstellen des Rotorblattes erfolgt dabei so, dass die Anströmung verbessert wird. Die Verstellung erfolgt also so, dass eine Ablöseneigung verringert bzw. behoben wird. Insbesondere wird dafür das Rotorblatt weiter in den Wind gedreht, der Blattwinkel also erhöht.

Zum Bewerten, ob eine kritische Anströmung vorliegt, wird ein Verfahren gemäß wenigstens einer der vorstehend beschriebenen Ausführungsformen verwendet. Es wird sich also insbesondere das Verfahren zunutze gemacht, wenigstens einen Teil eines Druckspektrums am Rotorblatt an einer Messposition aufzunehmen und zwei charakteristische Werte aus dem Druckspektrum zu bestimmen und daraus einen Indikatorwert zu bestimmen, nämlich aus der Beziehung dieser beiden charakteristischen Werte zueinander. Schließlich wird daraus in Abhängigkeit des gebildeten Indikatorwertes bewertet, ob eine kritische Anströmung vorliegt.

Das Verstellen des Rotorblattes erfolgt dann so, dass der Indikatorwert wieder unter einen Grenzwert, insbesondere unter den Verhältnisgrenzwert verringert wird. Entsprechend wird vorgeschlagen, ein solches Verfahren zum Bewerten ständig zu wiederholen, bspw. 10 mal pro Sekunde, ggf. mit sich zeitlich überschneidendem Messfenster, und entsprechend immer wieder neu auch den Bewertungsschritt auszuführen. Wird ein Indikatorwert festgestellt, der über dem Verhältnisgrenzwert liegt, wird somit das entsprechende Rotorblatt in seinem Anstellwinkel verstellt und entsprechend wird sich auch der Indikatorwert verringern. Das kann beobachtet werden und entsprechend kann sich das Verstellen des Blattwinkels daran orientieren.

Eine so durchgeführte Verstellung wird vorzugsweise für alle Rotorblätter der Windenergieanlage durchgeführt und kann beibehalten werden, besonders über wenigstens eine Umdrehung, insbesondere über mehrere Umdrehungen des Rotors.

Vorzugsweise wird ein oberer und ein unterer Hysteresegrenzwert vorgesehen, wobei ein Verstellen begonnen wird, wenn der Indikatorwert den oberen Hysteresegrenzwert überschreitet, das Verstellen aber fortgesetzt wird, bis der Indikatorwert den unteren Hysteresegrenzwert unterschreitet. Dabei ist der untere Hysteresegrenzwert kleiner als der obere Hysteresegrenzwert, so dass ein Hysteresebereich dadurch aufgespannt wird. Dadurch kann verhindert werden, dass bereits durch sich verändernde Messungen ein ständiges Regeln um einen einzigen Grenzwert herum erfolgt.

Es wurde erkannt, dass oftmals Bedingungen für OAM nur für eine kurze Zeit vorliegen, besonders für eine Zeit unter einer Minute. Zur Berücksichtigung wird gemäß einer Ausführungsform vorgeschlagen, einen Timer, also eine vorbestimmte Zeitdauer, vorzusehen, der bzw. die bei dauerhaftem Unterschreiten des unteren Hysteresegrenzwertes in einem vorgegebenen Zeitintervall, insbesondere einer Minute, die Windenergieanlage wieder in den normalen Betrieb zurückkehren lässt. Nach Ablauf des Timers, also nach Ablauf der vorbestimmten Zeitdauer nach dem letzten fortdauerndem Unterschreiten des unteren Hysteresewertes, wird somit die Verstellung des Rotorblattes wieder rückgängig gemacht.

Insbesondere wird ein Verfahren zum Steuern einer Windenergieanlage mit den folgenden Schritten vorgeschlagen:

- Aufnehmen wenigstens eines Teils eines Druckspektrums eines Drucks an einem Rotorblatt, insbesondere an einem Außenbereich des Rotorblattes auf der Saugseite in der Nähe der Rotorblatthinterkante,

- Durchführen einer Spektralauswertung des aufgenommenen Druckspektrums,

- Aufteilen des Druckspektrums in ein erstes und zweites Teilleistungsdichtespektrum,

- Berechnen eines ersten und zweiten Spektralanteils durch Integrieren des ersten bzw. zweiten Teilleistungsdichtespektrums,

- Bilden eines Quotienten des ersten und zweiten Spektralanteils als Indikatorwert,

- Vergleichen des Indikatorwertes mit einem vorgebbaren Verhältnisgrenzwert, und Bewerten, dass eine kritische Strömung vorliegt, wenn der Indikatorwert den Verhältnisgrenzwert überschreitet,

- Verringern des Anstellwinkels des Rotorblattes, wenn bewertet wurde, dass eine kritische Strömung vorliegt und

- Wiederholen dieser Schritte.

Vorzugsweise wird eine Erhöhung des Blattwinkels in einem beschränkten Bereich mit einem vorbestimmten Veränderungswinkel, insbesondere von 5° oder 10° durchgeführt, bezogen auf den Blattwinkel, der im Normalbetrieb eingestellt wäre. Gemäß dieser Ausführungsform wird somit vorgeschlagen, die genannten Schritte nacheinander durchzugehen und ständig zu wiederholen, um kontinuierlich die entsprechenden Messwerte aufzunehmen, auszuwerten und gegebenenfalls den Blattwinkel zu verstellen. Es wird darauf hingewiesen, dass hier ein Vergrößern des Blattwinkels zu einem Verringern des Anstellwinkels führt.

Außerdem wird ein Verfahren zum Steuern einer Windenergieanlage mit einem Rotor mit wenigstens einem in seinem Blattwinkel verstellbaren Rotorblatt vorgeschlagen, das die folgenden Schritte aufweist:

- Aufnehmen einer Schallmessung an der Windenergieanlage,

- Auswertung der Schallmessung, ob Infraschall mit einer Amplitude oberhalb eines vorgebbaren Infraschallgrenzwertes vorliegt und

- Verändern wenigstens einer Betriebseinstellung der Windenergieanlage, wenn die Auswertung der Schallmessung ergeben hat, dass Infraschall mit einer Amplitude oberhalb eines vorgebbaren Infraschallgrenzwertes vorliegt.

Somit wird hier vorgeschlagen, zunächst eine Schallmessung an der Windenergieanlage aufzunehmen. Das kann am Rotorblatt sein, aber auch an der Gondel oder dem Turm der Windenergieanlage. Es kommt auch eine Schallmessung in der Nähe der Windenergieanlage in Betracht. Jedenfalls wird hier eine Schallmessung vorgeschlagen, die überprüft, ob Infraschall mit einer gewissen Amplitude vorliegt. Hier geht es insbesondere um eine Amplitude, die überhaupt auch nur theoretisch zu einem für Menschen oder Tiere spürbaren Infraschall führen kann. Als Infraschall wird hier insbesondere Schall mit einer Frequenz von etwa 1 bis 20 Hz angenommen, sie kann aber auch niedriger liegen, z.B. bis 0,1 Hz.

Wird Infraschall mit einer solchen Amplitude erfasst, wird vorgeschlagen, wenigstens eine Betriebseinstellung der Windenergieanlage zu verändern. Dafür kann ein Infraschallgrenzwert vorgegeben und überprüft werden, ob der erfasste Infraschall eine darüber liegende Amplitude aufweist.

Hier kann auch eine Kombination mit wenigstens einer vorstehend beschriebenen Ausführungsform vorgenommen werden, die sich mit dem Erfassen einer kritischen Anströmung beschäftigt. Eine solche kritische Anströmung kann aufgrund der oben beschriebenen Phänomene als Frequenzmodulation wahrgenommen werden. Es kann daher in Betracht kommen, dass sich ähnliche Wirkungen und/oder ähnliches Empfinden für eine Frequenzmodulation einerseits als auch für Infraschall andererseits einstellen, obwohl beides physikalisch etwas Unterschiedliches ist. Bei der Frequenzmodulation treten Geräusche gewisser Frequenz oder Frequenzbereiche, die weit oberhalb von Infraschall liegen, pulsierend auf und können daher gegebenenfalls als Infraschall oder ähnlich wahrgenommen werden, weil das Pulsieren eine Frequenz im Infraschallbereich hat. Tatsächlicher Infraschall weist hingegen nur ein Geräusch auf mit sehr niedriger Frequenz, insbesondere 20 Hz oder weniger.

Als Gegenmaßnahme bei Infraschall, wenn dieser mit einer entsprechend hohen Amplitude erfasst wurde, wird nun vorgeschlagen, wenigstens eine Betriebseinstellung der Windenergieanlage zu verändern, um dadurch möglichst die Quelle und/oder Verstärkung von Infraschall zu verändern.

Vorzugsweise kommt zum Verstellen der Betriebseinstellung in Betracht, das Rotorblatt in seinem Anstellwinkel zu verändern, um die Anströmung zu verbessern, was auch der gemäß vielen oben beschriebenen Ausführungsformen vorgesehenen Maßnahme entspricht.

Außerdem oder alternativ wird vorgeschlagen, die Rotordrehzahl zu verändern, besonders zu verringern. Auch dadurch verringert sich die Quellstärke des Infraschalls.

Außerdem oder alternativ kommt in Betracht, die von der Windenergieanlage erzeugte Leistung zu verringern. Auch dies könnte eine Maßnahme zum Reduzieren von Infraschall sein. Dabei ist zu beachten, dass ein Verändern bzw. Verringern der erzeugten Leistung beispielsweise auch darauf Einfluss haben kann, welch einen großen Widerstand die Windenergieanlage dem Wind entgegensetzt. Entsprechend kann auch diese Maßnahme Einfluss auf die Schallerzeugung haben.

Gemäß einer Ausführungsform wird vorgeschlagen, dass das Rotorblatt mit einem Rotor der Windenergieanlage gedreht wird und

- zum Aufnehmen des wenigstens einen Teils des Druckspektrums der Druck über wenigstens eine Umdrehung, insbesondere mehrere Umdrehungen des Rotors aufgenommen wird und

- bei jeder Umdrehung nacheinander mehrere Druckmessungen durchgeführt werden, besonders gleichmäßig und/oder in gleichmäßigen Abständen, wobei

- zu jeder der Druckmessungen ein momentanes Druckspektrum bestimmt wird und aus den momentanen Druckspektren aller Druckmessungen der wenigstens einen Umdrehung der wenigstens eine Teil des Druckspektrums durch eine Mittelwertbildung gebildet wird.

Demnach dreht sich der Rotor, besonders im Betrieb der Windenergieanlage und dabei werden nacheinander, insbesondere kontinuierlich bzw. quasi-kontinuierlich, Druckmessungen aufgenommen. Besonders wird dauerhaft gemessen, besonders mit einem Geräuschsensor, der somit den Druck aufnimmt. Die Messung wird ausgewertet und ein Leistungsspektrum oder Leistungsdichtespektrum erstellt, nämlich zu jeder Messung bzw. zu jedem Messzeitpunkt. Bspw. kann die Messung abgetastet werden, mit einer Abtastfrequenz, die das Bestimmen eines Leistungsspektrums oder eines Leistungsdichtespektrums bspw. über FFT zulässt. Diese so ständig abgetastete Messung kann auch als quasi-kontinuierliche Messung bezeichnet werden.

Durch die Mittelwertbildung, die im einfachsten Fall als arithmetisches Mittel gebildet wird, entsteht ein gutes Gesamtbild über den dabei betrachteten Zeitraum. Es können auch vereinzelt auftretende starke Abweichungen heraus gemittelt werden und spielen keine große Rolle. Besonders können solche vereinzelt auftretenden starken Abweichungen dann die vorgeschlagene Regelung des Rotorblattes bzw. der Rotorblätter weniger beeinflussen. Es wurde auch erkannt, dass es ausreichend ist, dass ein wenig schwankender Wert, der sich dafür über einige Umdrehungen nicht oder wenig ändert, auch nur zu einer zurückhaltenden Blattverstellung führt. Zu häufiges Verstellen des Rotorblattes bzw. der Rotorblätter wird vermieden.

Gemäß eine Ausführungsform wird dazu vorgeschlagen, dass

- mit der Drehung des Rotors eine Winkelposition $\alpha$ des Rotor erfasst wird, und
- jedes momentane Druckspektrum vor der Mittelwertbildung mit dem Cosinus der Winkelposition a, cos(a) multipliziert wird, insbesondere ist die Winkelposition $\alpha$ dafür so definiert, dass sie den Wert 0° annimmt, wenn das betreffende Rotorblatt oben steht, also in der 12-Uhr Position steht.

Durch diese Maßnahme kann ein gleichmäßiges Rauschen, also ein Störsignal, das dem eigentlich auszuwertenden charakteristischen Signal, überlagert ist, aus dem Messsignal eliminiert werden oder zumindest reduziert werden. Dem liegt der folgende Gedanke zu Grunde.

Geräusche, die einen zu vermeidenden Strömungsabriss ankündigen können, treten besonders auf, wenn das Rotorblatt oben, also im Bereich einer 12-Uhr-Stellung des Rotorblattes, steht. Diese Geräusche bilden hier das charakteristische Signal. Oben sind nämlich die Windgeschwindigkeiten regelmäßig höher als unten und daher tritt dort auch eher ein Strömungsabriss auf. Dennoch wird vorgeschlagen, das Rotorblatt nicht nur für den oberen Bereich zu verstellen, sondern wenigstens für eine oder mehrere Umdrehungen verstellt zu lassen. Unter Beachtung der damit verbundenen zusätzlichen Wechsellasten auf Pitchlager oder Motoren kann alternativ natürlich auch eine zyklische Verstellung der Rotorblätter vorgesehen werden.

Es wurde erkannt, dass zusätzlich zu den zu identifizierenden Geräuschen, also dem charakteristischen Signal, auch ein etwa gleichmäßiges Geräusch, nämlich das Störsignal, überlagert ist. Dieses Störsignal tritt aber im Wesentlichen unabhängig der Höhe auf, also unabhängig davon, ob das Rotorblatt oben oder unten ist, wohingegen das charakteristische Signal im Wesentlichen oben auftritt.

Wird nun jedes momentane Messsignal, bzw. das daraus abgeleitete momentane Druckspektrum mit einem Cosinus der jeweils aktuellen bzw. zugehörigen Winkelposition des Rotorblattes multipliziert, wird es also mit cos(a) multipliziert, hat das auf das Störsignal einerseits und das charakteristische Signal andererseits im Ergebnis unterschiedliche Auswirkungen. Für das Störsignal entsteht im Grunde eine cos-Funktion bzw. eine Verteilung gemäß einer cos-Funktion, die über eine oder mehrere vollständige Umdrehungen gemittelt null ergibt. Dadurch wird das Störsignal herausgemittelt und dadurch herausgefiltert.

Das charakteristische Signal tritt aber im Wesentlichen oben auf, wenn die cos-Funktion im Wesentlichen den Wert eins aufweist. Es wird also dort, wo es mit tendentiell hohen Werten auftritt, mit eins multipliziert. Anders als das Störsignal weist es im unteren Bereich, also besonders im Bereich der 6-Uhr-Stellung, niedrigere Werte auf, die dann mit negativem Vorzeichen in die Mittelwertbildung einfließen. Somit ergibt sich über einer Überdrehung je nach Scherungsituation ein Wert, der nicht null ist.

Im Ergebnis bleibt das charakteristische Signal allein oder zumindest überwiegend über.

Für diesen Effekt ist es besonders vorteilhaft, wenn die Messung bzw. die Mittelwertbildung über eine ganze Umdrehung oder mehrere vollständige Umdrehungen aufgenommen wird. Aber besonders bei vielen Umdrehungen, z.B. 10 Umdrehungen oder mehr, wird sich der beschriebene filternde bzw. herausmittelnde Effekt dennoch einstellen, weil das Störsignal dadurch jedenfalls signifikant reduziert werden kann.

Erfindungsgemäß wird zudem eine Windenergieanlage mit einem Rotor mit in ihrem Anstellwinkel verstellbaren Rotorblättern vorgeschlagen, die das Folgende umfasst:

- wenigstens einen Sensor zum Aufnehmen wenigstens eines Teils eines Druckspektrums eines Wanddrucks an wenigstens einem der Rotorblätter an wenigstens einer Messposition, wobei die Windenergieanlage dazu vorbereitet ist,

    - wenigstens einen Teils des Druckspektrums auszuwerten,

    - in Abhängigkeit der Auswertung der Druckmessung zu Bewerten, ob eine kritische Anströmung am Rotorblatt vorliegt und

    - das Rotorblatt in seinem Anstellwinkel zu verstellen, wenn eine kritische Anströmung bewertet wurde, um die Anströmung zu verbessern.

Vorzugsweise wird vorgeschlagen, dass ein Verändern des Anstellwinkels des Rotorblattes zum Verbessern der Anströmung erst erfolgt, wenn die Windenergieanlage eine Rotordrehzahl oberhalb einer vorgebbaren Grenzdrehzahl aufweist. Hier liegt die Erkenntnis zugrunde, dass besonders die Frequenzmodulation nicht nur von der beschriebenen Auswertung der Druckspektren abhängt, sondern auch von der Drehzahl abhängen kann. Insbesondere sind die Effekte bei geringen Drehzahlen, die häufig auch mit geringen Windgeschwindigkeiten zusammenkommen, geringer.

Eine solche Windenergieanlage ist dazu vorgesehen, wenigstens ein Verfahren gemäß den vorstehend beschriebenen Ausführungsformen umzusetzen bzw. in sich zu implementieren.

Vorzugsweise ist für die Windenergieanlage vorgesehen, dass wenigstens ein Sensor in einer Rotorblattfläche als potentialfreier Sensor, insbesondere als optischer, besonders als faseroptischer Sensor, integriert ist. Ein solcher Sensor kann somit auf einfache Art und Weise an eine gewünschte Messposition im Rotorblatt verlegt werden. Durch die Verwendung eines potentialfreien Sensors, wie beispielsweise ein entsprechend präpariertes Lichtwellenleiterkabel, kann dabei das Risiko eines Blitzschlags in das Rotorblatt und insbesondere in den Sensor vermieden werden.

Die Erfindung wird nun nachfolgend anhand von Ausführungsbeispielen unter Bezugnahme auf die begleitenden Figuren näher erläutert.

Figur 1      zeigt eine Windenergieanlage in einer perspektivischen Darstellung.

Figur 2      ist ein Diagramm zum Erläutern von Ablöseerscheinungen am Rotorblatt.

Figur 3      zeigt zwei Leistungsdichtespektren für unterschiedliche Anstellwinkel.

Figur 4      zeigt Verläufe für Indikatorwerte bei unterschiedlichen Randbedingungen.

Figur 5      zeigt ein Diagramm zum Illustrieren eines Steuerungsablaufs zum Steuern einer Windenergieanlage.

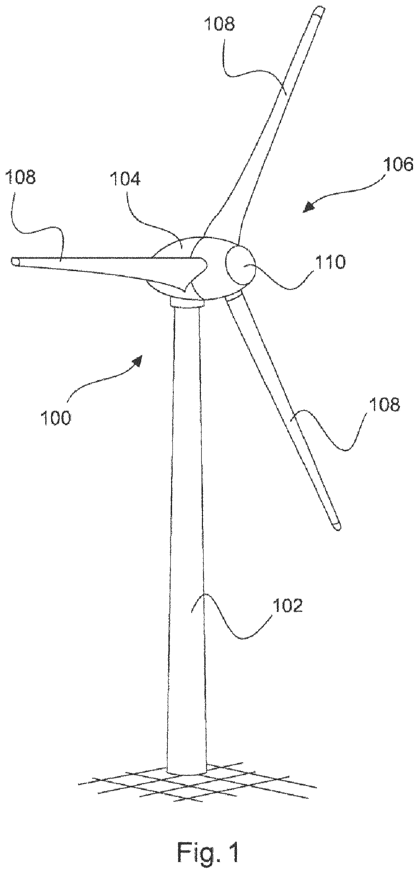

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Figur zeigt ein Profil 2 eines Rotorblatts an einer für die Erfindung relevanten Position. Das Profil, und damit auch das Rotorblatt, weist eine Blattnase 4 und eine Blatthinterkante 6 auf. Außerdem weist das Profil, und natürlich ebenfalls das Rotorblatt, eine Saugseite 8 und eine Druckseite 10 auf. Im Betrieb der Anlage bei laminaren Strömungsverhältnissen bildet sich sowohl an der Saugseite 8 als auch der Druckseite 10, was auch als Ober- bzw. Unterseite bezeichnet werden kann, jeweils eine Grenzschicht 12 bzw. 14 aus. Diese beiden dargestellten Grenzschichten 12 und 14 gehören zu einer Anströmung, die in einem gewünschten Betrieb mit im Wesentlichen laminarer Strömung sich einstellt und als normale Anströmung 16 dargestellt ist. Bezogen auf eine Vergleichsrichtung 18, die insbesondere parallel zur Sehne des Rotorblattes, die hier nicht eingezeichnet ist, liegt, stellt sich entsprechend ein normaler Anstellwinkel 20 ein. Ein solcher Anstellwinkel, also der normale Anstellwinkel 20 als auch ein unten noch erläuterter kritischer Anstellwinkel 22, ergeben sich aus einer vektoriellen Addition eines Vektors, der die Windgeschwindigkeit wiedergibt, mit einem Vektor, der der Bewegung des Rotorblattes mit negativem Vorzeichen entspricht.

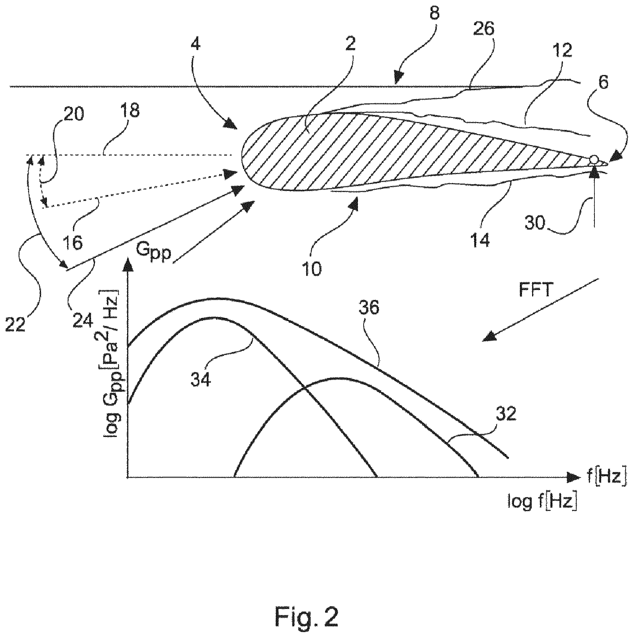

Erhöht sich nun die Windgeschwindigkeit bei gleichbleibender Bewegung des Rotorblattes, also des Profils 2, ändert sich auch die Anströmung in ihrer Richtung bis hin zu einer in Figur 2 eingezeichneten kritischen Anströmung 24, die den genannten kritischen Anstellwinkel 22 aufweist. Von einer kritischen Anströmung ist dann auszugehen, wenn sich besonders die obere Grenzschicht, also die Grenzschicht 12 der Saugseite 8 verändert und eine Ablöseneigung entsteht. Eine solche kritische Situation ist mit einer entsprechend veränderten Grenzschicht 26 in Figur 2 eingezeichnet, die der kritischen Anströmung 24 zugeordnet ist. In einer solchen Situation verändern und erhöhen sich auch die Strömungsgeräusche.

Figur 2 erläutert auch anhand von Leistungsdichtespektren eine den unterschiedlichen Situationen zugrunde liegende Geräuschcharakteristik. Dafür nimmt ein Drucksensor 30 an diesem relevanten Profil 2 auf der Saugseite 8 und in der Nähe der Blatthinterkante 6 Drucksignale, insbesondere nämlich Schall auf. Der Drucksensor 30 kann somit ein Mikrofon sein.

Diese aufgenommenen Druck- bzw. Schallsignale können mittels einer FFT, also einer Fourier-Transformation in ein Leistungsdichtespektrum umgerechnet werden und das Diagramm der Figur 2 zeigt Leistungsdichtespektren für drei Situationen, nämlich ein normales Leistungsdichtespektrum 32, das sich bei normaler Anströmung, besonders bei der normalen Anströmung 16 einstellt, ein kritisches Leistungsdichtespektrum 34, das sich bei einer kritischen Anströmung, besonders der kritischen Anströmung 24 einstellen kann und ein Leistungsspektrum bei Ablösung 36, das sich einstellen kann, wenn sich die Strömung ablöst.

Diese drei Leistungsdichtespektren sind als Leistungsdichtespektren $G_{PP}$ über die Frequenz f doppeltlogarithmisch dargestellt.

Es ist jedenfalls zu erkennen, dass die unterschiedlichen Situationen die Leistungsdichtespektren deutlich verändern. Neben einer Erhöhung vom normalen zum kritischen Zustand ist auch eine Verschiebung in der Frequenz zu erkennen.

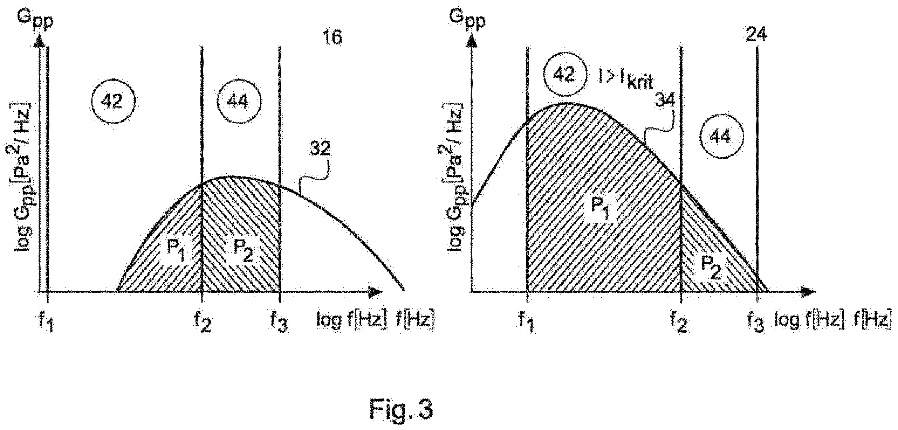

Das wird sich nun zunutze gemacht, wie die Figur 3 erläutert. Das normale Leistungsdichtespektrum 32 und das kritische Leistungsdichtespektrum 34 der Figur 2 sind in Figur 3 in getrennten Diagrammen eingezeichnet. Dabei sind beide Leistungsdichtespektren in einen niedrigen Frequenzbereich 42 und einen hohen Frequenzbereich 44 unterteilt. Die dort jeweils enthaltenen Spektralanteile werden als niedriger Spektralanteil $P_1$ bzw. hoher Spektralanteil $P_2$ bezeichnet.

Es ist deutlich zu erkennen, dass der niedrige Spektralanteil $P_1$ bei der normalen Anströmung 16 den kleineren Anteil und bei der kritischen Anströmung 24 den größeren Anteil bildet. Zur Auswertung wird nun vorgeschlagen, jeweils die Teilleistungsdichtespektren zu integrieren und einen Quotienten zu bilden, der dann als Indikatorwert I verwendet werden kann. Entsprechend wird zur Berechnung des Indikatorwertes I ein Quotient aus dem niedrigen Spektralanteil $P_1$ und dem hohen Spektralanteil $P_2$ nach folgender Formel vorgeschlagen:

$$I = \frac{P_1}{P_2} = \int_{f_1}^{f_2} G_{pp}\,(f)df \; / \int_{f_2}^{f_3} G_{pp}\,(f)df$$

Entsprechend wird gemäß einer Ausführungsform vorgeschlagen, das Spektrum in den niedrigen und hohen Frequenzbereich 42 bzw. 44 zu teilen. Die beiden Leistungsteildichtespektren, die sich durch diese Unterteilung ergeben, sind jeweils zu integrieren und daraus zum Bilden des Indikatorwertes ein Quotient zu berechnen. Nun kann als Verhältnisgrenzwert ein vorher kalibrierter Schwellwert für diesen Indikatorwert zugrunde gelegt werden. Wird dieser vorher kalibrierte Schwellwert durch den Indikatorwert überschritten, wird das Rotorblatt bzw. die Rotorblätter etwas, beispielsweise zunächst um 1°, aus dem Wind gedreht, was der Fachmann auch als Herauspitchen bezeichnen kann.

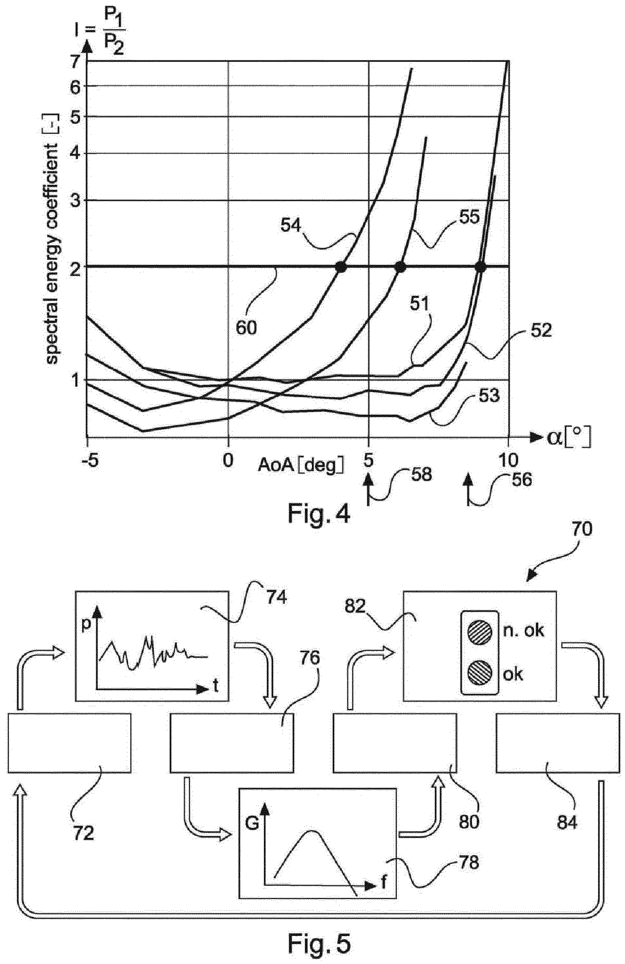

Die Verläufe solcher Indikatorwerte, also der beschriebenen Quotienten I, sind in Figur 4 für unterschiedliche Windgeschwindigkeiten und für saubere und verschmutzte Rotorblätter in Abhängigkeit des Anstellwinkels dargestellt. Diese Verläufe sind in Versuchen in einem Windkanal aufgenommen worden.

Es sind dabei fünf Kurven 51-55 aufgetragen, zu denen die folgenden Randbedingungen gelten:

> 51: 40 m/s Windgeschwindigkeit bei sauberem Blatt
>
> 52: 60 m/s Windgeschwindigkeit bei sauberem Blatt
>
> 53: 80 m/s Windgeschwindigkeit bei sauberem Blatt
>
> 54: 60 m/s Windgeschwindigkeit bei verschmutztem Blatt
>
> 55: 80 m/s Windgeschwindigkeit bei verschmutztem Blatt

Für die Fälle mit sauberem, also unverschmutztem Rotorblatt, also für die Fälle mit sehr glatter Profiloberfläche, fallen die Kurven unterschiedlicher Anströmgeschwindigkeit, nämlich 51, 52 und 53, fast aufeinander. Der Indikatorwert, der auch als Quotient der Leistungsdichtespektren oder als "spectral energy coefficient" bezeichnet werden kann, würde somit für diese sauberen Fälle immer sehr gut eine beginnende Ablösung detektieren. Dazu würde nur dieser Koeffizient benötigt werden und besonders die Kenntnis der Anströmgeschwindigkeit als auch der Drehzahl wird dafür nicht benötigt. Zur Verdeutlichung ist dafür eine saubere Ablösegrenze 56 eingezeichnet, die etwa einen Anstellwinkel bezeichnet, hier nämlich etwa 8,5°, bei dem sich auch bei sauberer und damit sehr glatter Profiloberfläche ein Ablösen ergeben würde und sich auch in Versuchen im Windkanal ergeben haben.

Für den verschmutzten Fall, also die Kurven 54 und 55, liegt der kritische Anstellwinkel niedriger als im sauberen Fall. Auch dies wird von dem Indikatorwert, also hier den Indikatorwerten 54 und 55, abgebildet. Es ist dabei allerdings eine leichte Drehzahlabhängigkeit, nämlich Abhängigkeit der Anströmwindgeschwindigkeit sichtbar. Zur Veranschaulichung ist auch für verschmutzte Rotorblätter eine verschmutzte Ablösegrenze 58 eingezeichnet.

Durch die Wahl geeigneter Grenzfrequenzen kann ein solcher Einfluss der Drehzahl bzw. der Windgeschwindigkeit und der Verschmutzungssituation vermindert werden. Solche Grenzfrequenzen, nämlich die untere, mittlere und obere Frequenz $f_1$, $f_2$ bzw. $f_3$ können entsprechend vorher ermittelt und in den entsprechenden Auswertealgorithmus einprogrammiert werden. Es können auch vier Frequenzen vorliegen, von denen jeweils zwei einen Frequenzbereich definieren. Davon könnten zwei Frequenzen übereinstimmen und entsprechend die mittlere Frequenz $f_2$ bilden, oder es können tatsächlich vier unabhängige Frequenzen gewählt werden.

Außerdem oder alternativ könnte auch die beschriebene Regelung erst ab einer schallkritischen Drehzahl scharf geschaltet werden, oberhalb der der Indikatorwert sicher arbeitet. Es kann also vorgeschlagen werden, das Herauspitchen basierend auf dem Indikatorwert erst durchzuführen, wenn eine vorgegebene Mindestdrehzahl vorliegt.

Figur 4 zeigt somit das Verhältnis des niedrigen Spektralanteils $P_1$ und des hohen Spektralanteils $P_2$ für unterschiedliche Randbedingungen. Dafür wurden unterschiedliche Grenzfrequenzen, nämlich die untere, mittlere und obere Frequenz bzw. Grenzfrequenz $f_1$, $f_2$ bzw. $f_3$ ausgewählt, die auch für unterschiedliche Randbedingungen, also besonders unterschiedliche Anströmwindgeschwindigkeiten auch bei verschmutztem Rotorblatt einen aussagekräftigen Indikatorwert in Bezug auf einen Verhältnisgrenzwert liefern. Bei dem Verhältnisgrenzwert 60, der dort den Wert 2 hat, können somit über den Indikatorwert Ablösetendenzen auch für die unterschiedlichen Bedingungen gut erkannt werden. Die dafür gewählten Frequenzen betragen: $f_1$ = 200 Hz, $f_2$ = 400 Hz und $f_3$ = 600 Hz.

Zur Umsetzung wird vorgeschlagen, den oder die Sensoren im Außenbereich des Rotorblattes, auf der Saugseite, in unmittelbare Nähe der Hinterkante anzubringen. Von dort aus können faseroptische Leitungen möglichst entlang einer neutralen Faser, beispielsweise entlang eines Stegs in der Tragkonstruktion des Rotorblattes, in Richtung zur Nabe hin verlegt werden. Dort kann der Sensor bzw. die Sensoren mit einer Auswerteeinheit im Rotorblatt, besonders wenn nur ein Sensor vorliegt, oder in der Nabe, besonders wenn drei Sensoren, nämlich ein Sensor je Rotorblatt, vorliegt, verbunden werden. An der Auswerteeinheit können die von dem oder den Sensoren zurückgeworfenen Lasersignale, um ein Beispiel zu nennen, ausgewertet werden.

Es wird dann vorgeschlagen, eine solche Auswerteeinheit, insbesondere eine dazu verwendete auswertende Mikroprozessoreinheit, an die Anlagensteuerung und Anlagenregelung der Windenergieanlage anzubinden. Dadurch kann ein solcher ausgewerteter Messwert, also insbesondere der Indikatorwert, beim Überschreiten einer vorher kalibrierten Schwelle, ein Verfahren der Blatteinstellwinkelmotoren hin zu kleineren Anstellwinkeln bewirken. Eine solche kalibrierte Schwelle ist in Figur 4 als Verhältnisgrenzwert 60 eingezeichnet. Eine solche Steuerungsmaßnahme wird sich zu einer Verminderung des Indikatorwertes auswirken. Bezogen auf das Diagramm der Figur 4, entspräche das einer Verringerung des Anstellwinkels a, so dass sich die Werte entsprechend dieses geänderten Anstellwinkels auf der betreffenden Kurve verändern.

Zum Auslösen einer solchen Aktion, nämlich das Verstellen der Rotorblätter, kann das Ansprechen eines Sensors, also nach Durchführung der Auswertung des Indikatorwertes, ausreichen. Vorzugsweise wird eine anschließende Wartezeit vorgesehen, die bspw. eine Minute betragen kann, bevor der Blattwinkel wieder zurückgedreht werden kann, wenn der Indikatorwert während dieser Zeit stets unterhalb des Grenzwertes, bzw. unterhalb des unteren Hysterewertes, lag. Übersteigt der Indikatorwert abermals den Grenzwert, so ist der Blattwinkel weiter zu erhöhen, bis der Indikatorwert dauerhaft unterhalb der Schwelle liegt.

Wurde dann für eine längere Zeit der Indikatorwert nicht ausgelöst, weil beispielsweise veränderte atmosphärische Bedingungen vorliegen, so kann der Blattwinkel, der auch als Pitchwinkel bezeichnet werden kann, zur Steigerung der Leistung wieder verringert werden. Diese Erhöhung zur Leistungssteigerung kann dann durch die Anlagensteuerung realisiert werden.

Gemäß einer weiteren Ausführungsform wird vorgeschlagen, einen zweiten, kleineren Verhältnisgrenzwert zugrunde zu legen, also einen zweiten Verhältnisgrenzwert, der kleiner als der Verhältnisgrenzwert 60 ist. Dadurch kann eine Regelhysterese in der Steuerung realisiert werden. Dieser zweite Verhältnisgrenzwert müsste nach dem Auftreten eines oben beschriebenen OAM-Lärms zunächst (dauerhaft) unterschritten werden, bevor der Blattwinkel wieder verringert werden kann, also bevor das Rotorblatt wieder in Richtung zu einem optimalen Blattwinkel verstellt wird.

Der Ablauf einer Steuerung ist in Figur 5 veranschaulicht. Figur 5 zeigt somit ein Regelungsdiagramm 70, bei dem ein Sensorblock 72 für das Aufnehmen eines zeitabhängigen Druckes p steht, der in dem zeitabhängigen Druckdiagramm 74 veranschaulicht ist. Dieser zeitabhängige Druckverlauf gemäß Druckdiagramm 74 wird dann gemäß dem Spektralauswertungsblock 76 in ein Leistungsdichtespektrum $G_{pp}$ (f) umgerechnet und dieses Ergebnis wird im Leistungsdichtespektrumblock 78 veranschaulicht.

In dem Integrationsauswerteblock 80 erfolgt dann eine Auswertung des Leistungsdichtespektrums, das der Block 78 veranschaulicht. Bei dieser Auswertung wird eine Unterteilung in zwei Frequenzbereiche vorgenommen, basierend auf einer unteren, mittleren und oberen Frequenz $f_1$, $f_2$ bzw. $f_3$. Das Leistungsdichtespektrum wird somit in einen unteren und oberen Spektralanteil unterteilt und diese beiden Leistungsdichtespektren des niedrigen bzw. hohen Spektralanteils werden integriert und es wird ein Verhältnis dieser beiden integrierten Werte gebildet, um daraus einen Indikatorwert zu bilden.

Dieser Indikatorwert wird dann mit einem Grenzwert, nämlich besonders einem Verhältnisgrenzwert verglichen und davon abhängig wird im Entscheidungsblock 82 entschieden, ob der Indikatorwert niedrig genug ist, um noch von einer normalen Anströmung auszugehen, oder ob er den Verhältnisgrenzwert überschritten hat und somit von einer kritischen Anströmung ausgegangen werden muss, was in dem Entscheidungsblock 82 als nicht ok (n.ok) veranschaulicht ist. Andernfalls kann das Ergebnis im Entscheidungsblock als ok veranschaulicht werden. Davon abhängig wird dann in dem Stellblock 84 ein Steuersignal zum Vergrößern des Blatteinstellwinkels zum Verringern des Anstellwinkels erzeugt, wenn im Entscheidungsblock 82 festgestellt wurde, dass eine kritische Anströmung vorliegt, das Ergebnis also nicht ok war. Der Stellblock 84 kann in der zentralen Anlagensteuerung realisiert werden, deren Software um die Berücksichtigung des erfindungsgemäßen Indikators entsprechend erweitert wird.

Dieser in dem Regelungsdiagramm 70 veranschaulichte Vorgang wird dann kontinuierlich wiederholt. Eine solche Wiederholung kann im Bereich von etwa 0,01 bis 0,2 Sekunden liegen. Ein unterer Wert von 0,01 Sekunden (d.h. 100Hz) ist besonders dann vorteilhaft, wenn der Indikator tiefpassgefiltert wird. Besonders für diesen Fall wird eine solche hohe Evaluationsrate vorgeschlagen.

Es wurde somit nun eine Lösung vorgeschlagen, mit der ein unerwünschtes Lärmphänomen, das in der Fachwelt auch als "Other Amplitude Mudulation, OAM) bezeichnet wird, verhindert oder zumindest verringert werden kann. Dazu werden besonders in der Blattoberfläche integrierte Sensoren, oder zumindest einer davon, und eine Regelungsstrategie vorgeschlagen. Mit einer guten Wahl der Parameter, besonders der unteren, mittleren und oberen Frequenz $f_1$, $f_2$ bzw. $f_3$ kann das Phänomen nicht nur reduziert, sonder vollständig unterbunden werden. Besonders vorteilhaft ist zudem, dass die Auswertung der Messsignale unabhängig oder zumindest robust gegenüber der Kalibrierung, der Anströmgeschwindigkeit und des Verschmutzungszustandes des Blattes oder auch einer Erosion des Blattes ist.

Somit konnte auch eine Lösung geschaffen werden, die mit einem möglichst geringen messtechnischen Aufwand und einer möglichst geringen Sensitivität des Verfahrens auf Umwelteinflüsse auskommt, die das Messobjekt beeinflussen und zu falschen Ergebnissen führen könnten. Dazu gehören für das Oberflächendruckfeld des Rotorblattes verantwortliche Wirbel innerhalb einer turbulenten Grenzschicht.

Besonders ist die vorgeschlagene Lösung auch Verfahren gegenüber überlegen, die erst in einem Fernfeld ein OAM-Ereignis detektieren, um in die Regelung einzugreifen, um das Problem wieder zu beseitigen. Die Lösung hat auch Vorteile gegenüber Verfahren, die auf einer Bestimmung des Anstellwinkels beruhen, da der kritische Anstellwinkel von den Eigenschaften der Grenzschicht um das Rotorblattprofil und damit von der Beschaffenheit der Oberfläche besonders auch von Verschmutzungen abhängig ist.

**Patentansprüche**

1. Verfahren zum Bewerten einer Anströmung an einem Rotorblatt (108) einer Windenergieanlage (100) umfassend die Schritte:

   - Aufnehmen wenigstens eines Teils eines Druckspektrums eines Drucks (P), insbesondere Wanddrucks an dem Rotorblatt (108) an wenigstens einer Messposition,

- Bestimmen wenigstens zweier charakteristischer Werte (P1, P2) aus dem Druckspektrum,
- Bilden eines Indikatorwertes (I) aus einer Beziehung der wenigstens zwei charakteristischen Werte (P1, P2) zueinander und
- Bewerten in Abhängigkeit des Indikatorwertes (I), ob eine kritische Anströmung (24) vorliegt.

2. Verfahren nach Anspruch 1, **dadurch gekennzeichnet, dass** die wenigstens zwei charakteristischen Werte (P1, P2) einen ersten Spektralwert (P1) und einen zweiten Spektralwert (P2) aufweisen und

- der erste Spektralwert (P1) ein charakteristischer Wert eines niedrigen Frequenzbereichs des Druckspektrums ist und
- der zweite Spektralwert (P2) ein charakteristischer Wert eines hohen Frequenzbereichs des Druckspektrums ist.

3. Verfahren nach Anspruch 1 oder 2, **dadurch gekennzeichnet, dass**

- das Druckspektrum als Leistungsdichtespektrum ($G_{PP}(f)$) ausgebildet ist und in
- ein erstes Teilleistungsdichtespektrum in einem bzw. dem niedrigen Frequenzbereich (42) und
- ein zweites Teilleistungsdichtespektrum in einem bzw. dem hohen Frequenzbereich (44) unterteilt ist und
- die wenigstens zwei charakteristischen Werte als erster und zweiter Spektralanteil ($P_1$, $P_2$) ausgebildet sind, wobei
- der erste Spektralanteil ($P_1$) durch Integration des ersten Teilleistungsdichtespektrums über den niedrigen Frequenzbereich gebildet wird und
- der zweite Spektralanteil ($P_2$) durch Integration des zweiten Teilleistungsdichtespektrums über den hohen Frequenzbereich gebildet wird.

4. Verfahren nach Anspruch 2 oder 3, **dadurch gekennzeichnet, dass**

- der niedrige Frequenzbereich (42) zwischen einer unteren und einer mittleren Frequenz ($f_1$, $f_2$) liegt,
- der hohe Frequenzbereich (44) zwischen der mittleren und einer oberen Frequenz ($f_2$, $f_3$) liegt und

wenigstens eine der unteren, mittleren und oberen Frequenz ($f_1$, $f_2$, $f_3$) eingestellt wird gemäß wenigstens einer Einstellvorschrift der Tabelle aufweisend:

- die mittlere Frequenz ($f_2$) wird so eingestellt, dass das Leistungsdichtespektrum ein Maximum im niedrigen Frequenzbereich (42) hat, wenn eine kritische Anströmung (24) vorliegt,
- die untere, mittlere und obere Frequenz ($f_1$, $f_2$, $f_3$) werden so eingestellt, dass der niedrige Frequenzbereich (42) und der hohe Frequenzbereich (44) gleich groß sind,
- die untere, mittlere und obere Frequenz ($f_1$, $f_2$, $f_3$) werden in Abhängigkeit eines Verschmutzungsgrades des Rotorblattes (108) eingestellt,
- die untere, mittlere und obere Frequenz ($f_1$, $f_2$, $f_3$) werden abhängig von Schallemissionsgrenzwerten am Aufstellungsort der Windenergieanlage (100) eingestellt,
- die untere, mittlere und obere Frequenz ($f_1$, $f_2$, $f_3$) werden in Abhängigkeit von Schallmessungen im Bereich der Windenergieanlage (100) eingestellt und
- die untere, mittlere und obere Frequenz ($f_1$, $f_2$, $f_3$) werden auf Werte in einem Intervall von $\pm$ 50 Hz um 200 Hz, 400 Hz bzw. 600 Hz eingestellt.

5. Verfahren nach einen der vorstehenden Ansprüche, **dadurch gekennzeichnet,**

- **dass** der Indikatorwert (I) ein Quotient ist aus zwei der wenigstens zwei charakteristischen Werte bzw. aus dem ersten und zweiten Spektralwert bzw. aus dem ersten und zweiten Spektralanteil ($P_1$, $P_2$) und
- **dass** bewertet wird, dass eine kritische Anströmung (24) vorliegt, wenn der Indikatorwert (I) oberhalb eines vorgebbaren Verhältnisgrenzwertes (60) liegt.

6. Verfahren nach einem der vorstehenden Ansprüche, **dadurch gekennzeichnet, dass** die wenigstens eine Messposition

- im Bereich einer Rotorblatthinterkante (6) des Rotorblattes,
- auf der Saugseite (8) des Rotorblattes (108) und/oder

- in Längsrichtung in einem Bereich von 60% bis 95%, besonders 75% bis 85% von einem Anschlussbereich des Rotorblattes (108) bis zu einer Blattspitze des Rotorblattes (108), angeordnet ist.

**7.** Verfahren zum Steuern einer Windenergieanlage (100) mit einem Rotor (106) mit wenigstens einem in seinem Blattwinkel verstellbaren Rotorblatt (108) **gekennzeichnet durch** die Schritte:

- Auswerten einer Druckmessung an wenigstens einem Rotorblatt (108) an wenigstens einer Messposition,
- Bewerten in Abhängigkeit der Auswertung der Druckmessung, ob eine kritische Anströmung (24) am Rotorblatt (108) vorliegt und
- Verstellen des Rotorblatts (108) in seinem Anstellwinkel, wenn eine kritische Anströmung (24) bewertet wurde, um die Anströmung zu verbessern,
wobei zum Bewerten, ob eine kritische Anströmung (24) vorliegt, ein Verfahren nach einem der Ansprüche 1 bis 6 verwendet wird.

**8.** Verfahren nach Anspruch 7, **dadurch gekennzeichnet, dass** das Verstellen des Blattwinkels so erfolgt, dass sich ein bzw. der Indikatorwert (I) wieder unter einen Grenzwert oder den Verhältnisgrenzwert (60) verringert.

**9.** Verfahren nach Anspruch 8, **dadurch gekennzeichnet, dass** ein Verstellen des Rotorblatts (108) in seinem Anstellwinkel beginnt, wenn eine kritische Anströmung (24) dadurch bewertet wurde, dass der Indikatorwert (I) einen oberen Hysteresegrenzwert überschreitet, und das Verstellen fortgesetzt wird, bis der Indikatorwert (I) einen unteren Hysteresegrenzwert unterschreitet, der kleiner ist als der obere Hysteresegrenzwert.

**10.** Verfahren nach einem der Ansprüche 7 bis 9, **gekennzeichnet durch** die Schritte:

- Aufnehmen einer Schallmessung an der Windenergieanlage (100),
- Auswertung der Schallmessung, ob Infraschall mit einer Amplitude oberhalb eines vorgebbaren Infraschallgrenzwerts vorliegt und
- Verändern wenigstens einer Betriebseinstellung der Windenergieanlage (100), wenn die Auswertung der Schallmessung ergeben hat, dass Infraschall mit einer Amplitude oberhalb eines vorgebbaren Infraschallgrenzwerts vorliegt.

**11.** Verfahren nach Anspruch 10, **dadurch gekennzeichnet, dass** das Verstellen der Betriebseinstellung wenigstens eine Verstellung umfasst aus der Liste bestehend aus

- Verstellen des Rotorblatts (100) in seinem Anstellwinkel, um die Anströmung zu verbessern,
- Verändern, besonders Verringern, einer Rotordrehzahl und
- Verändern, besonders Verringern, einer von der Windenergieanlage erzeugten Leistung.

**12.** Verfahren nach einem der vorstehenden Ansprüche, **dadurch gekennzeichnet, dass** ein Verändern des Anstellwinkels des Rotorblattes (108) zum Verbessern der Anströmung erst erfolgt, wenn die Windenergieanlage (100) eine Rotordrehzahl oberhalb einer vorgebbaren Grenzdrehzahl aufweist.

**13.** Verfahren nach einem der vorstehenden Ansprüche, **dadurch gekennzeichnet, dass**

- das Rotorblatt mit einem Rotor der Windenergieanlage gedreht wird und
- zum Aufnehmen des wenigstens einen Teils des Druckspektrums der Druck über wenigstens eine Umdrehung, insbesondere mehrere Umdrehungen des Rotors aufgenommen wird und
- bei jeder Umdrehung nacheinander mehrere Druckmessungen durchgeführt werden, besonders gleichmäßig und/oder in gleichmäßigen Abständen, wobei
- zu jeder der Druckmessungen ein momentanes Druckspektrum bestimmt wird und aus den momentanen Druckspektren aller Druckmessungen der wenigstens einen Umdrehung der wenigstens eine Teil des Druckspektrums durch eine Mittelwertbildung gebildet wird.

**14.** Verfahren nach Anspruch 13, **dadurch gekennzeichnet, dass**

- mit der Drehung des Rotors eine Winkelposition $\alpha$ des Rotors erfasst wird, und
- jedes momentane Druckspektrum vor der Mittelwertbildung mit dem Cosinus der Winkelposition a, cos(a) multipliziert wird, insbesondere ist die Winkelposition $\alpha$ dafür so definiert, dass sie den Wert 0° annimmt, wenn das betreffende Rotorblatt oben steht, also in der 12-Uhr Position steht.

15. Windenergieanlage (100) mit einem Rotor (106) mit in ihrem Anstellwinkel verstellbaren Rotorblättern (108), umfassend

   - wenigstens einen Sensor (30) zum Aufnehmen wenigstens eines Teils eines Druckspektrums eines Wanddrucks an wenigstens einem der Rotorblätter (108) an wenigstens einer Messposition, wobei die Windenergieanlage (100) dazu vorbereitet ist, ein Verfahren nach einem der Ansprüche 1 bis 14 auszuführen.

**Claims**

1. A method for assessing an incident flow at a rotor blade (108) of a wind power installation (100), comprising the steps of:

   - recording at least part of a pressure spectrum of a pressure (P), in particular wall pressure at the rotor blade (108) at at least one measurement position,
   - determining at least two characteristic values (P1, P2) from the pressure spectrum,
   - forming an indicator value (I) from a relationship between the at least two characteristic values (P1, P2) and
   - assessing whether a critical incident flow (24) is present, depending on the indicator value (I).

2. The method as claimed in claim 1, **characterized in that**
   the at least two characteristic values (P1, P2) have a first spectral value (P1) and a second spectral value (P2) and

   - the first spectral value (P1) is a characteristic value of a low frequency range of the pressure spectrum and
   - the second spectral value (P2) is a characteristic value of a high frequency range of the pressure spectrum.

3. The method as claimed in claim 1 or 2, **characterized in that**

   - the pressure spectrum is embodied as a power density spectrum ($G_{PP}(f)$) and subdivided into
   - a first partial power density spectrum in a, or the, low frequency range (42) and
   - a second partial power density spectrum in a, or the, high frequency range (44) and
   - the at least two characteristic values are embodied as first and second spectral component ($P_1$, $P_2$), wherein
   - the first spectral component ($P_1$) is formed by integrating the first partial power density spectrum over the low frequency range and
   - the second spectral component ($P_2$) is formed by integrating the second partial power density spectrum over the high frequency range.

4. The method as claimed in claim 2 or 3, **characterized in that**

   - the low frequency range (42) lies between a lower and a mid frequency ($f_1$, $f_2$),
   - the high frequency range (44) lies between the mid and an upper frequency ($f_2$, $f_3$) and

   at least one of the lower, mid and upper frequency ($f_1$, $f_2$, $f_3$) is set according to at least one adjustment prescription of the table including:

   - the mid frequency ($f_2$) is set in such a way that the power density spectrum has a maximum in the low frequency range (42) when a critical incident flow (24) is present,
   - the lower, mid and upper frequency ($f_1$, $f_2$, $f_3$) are set in such a way that the low frequency range (42) and the high frequency range (44) have the same size,
   - the lower, mid and upper frequency ($f_1$, $f_2$, $f_3$) are set depending on a degree of dirtying of the rotor blade (108),
   - the lower, mid and upper frequency ($f_1$, $f_2$, $f_3$) are set depending on sound emission limits at the installation site of the wind power installation (100),
   - the lower, mid and upper frequency ($f_1$, $f_2$, $f_3$) are set depending on sound measurements in the region of the wind power installation (100) and
   - the lower, mid and upper frequency ($f_1$, $f_2$, $f_3$) are set to values within an interval of $\pm$ 50 Hz around 200 Hz, 400 Hz and 600 Hz, respectively.

**5.** The method as claimed in any one of the preceding claims, **characterized**

- **in that** the indicator value (I) is a quotient of two of the at least two characteristic values or of the first and second spectral value or of the first and second spectral component ($P_1$, P2) and
- **in that** a critical incident flow (24) is assessed as present if the indicator value (I) lies above a specifiable ratio limit value (60).

**6.** The method as claimed in any one of the preceding claims, **characterized in that** the at least one measurement position is arranged

- in the region of a rotor blade trailing edge (6) of the rotor blade,
- on the suction side (8) of the rotor blade (108) and/or
- in a mid region of the rotor blade (108) in the range of 60% to 95%, in particular 75% to 85%, from a connection region of the rotor blade (108) to a blade tip of the rotor blade (108).

**7.** A method for controlling a wind power installation (100) having a rotor (106) with at least one rotor blade (108) that is adjustable in terms of its blade angle, **characterized by** the steps of:

- evaluating a pressure measurement at at least one rotor blade (108) at at least one measurement position,
- assessing whether a critical incident flow (24) is present at the rotor blade (108) depending on the evaluation of the pressure measurement and
- adjusting the rotor blade (108) in terms of its angle of attack if an incident flow (24) was assessed as critical in order to improve the incident flow,
wherein a method as claimed in any one of claims 1 to 6 is used to assess whether a critical incident flow (24) present.

**8.** The method as claimed in claim 7, **characterized in that** the blade angle is adjusted in such a way that a, or the, indicator value (I) is reduced to below a limit value or the ratio limit value (60) again.

**9.** The method as claimed in claim 8, **characterized in that** an adjustment of the rotor blade (108) in terms of its angle of attack starts when an incident flow (24) was assessed as critical by virtue of the indicator value (I) exceeding an upper hysteresis limit value and the adjustment is continued until the indicator value (I) drops below a lower hysteresis limit value that is smaller than the upper hysteresis limit value.

**10.** The method as claimed in any one of claims 7 to 9, **characterized by** the steps of:

- recording a sound measurement at the wind power installation (100),
- evaluating the sound measurement as to whether infrasound with an amplitude above a prescribable infrasound limit value is present and
- modifying at least one operational setting of the wind power installation (100) if the evaluation of the sound measurement has yielded infrasound with an amplitude above a prescribable infrasound limit value being present.

**11.** The method as claimed in claim 10, **characterized in that** adjusting the operational setting comprises at least one adjustment from the list consisting of

- adjusting the rotor blade (100) in terms of its angle of attack in order to improve the incident flow,
- modifying, in particular reducing, a rotor rotational speed and
- modifying, in particular reducing, a power produced by the wind power installation.

**12.** The method as claimed in any one of the preceding claims, **characterized in that** modifying of the angle of attack of the rotor blade (108) for improving the incident flow only takes place once the wind power installation (100) has a rotor rotational speed above a prescribable limit rotational speed.

**13.** The method as claimed in any one of the preceding claims, **characterized in that**

- the rotor blade is rotated by a rotor of the wind power installation and
- the pressure is recorded over at least one revolution, in particular over a plurality of revolutions, of the rotor, for recording the at least one part of the pressure spectrum and
- a plurality of pressure measurements are carried out successively during each revolution, in particular in uniform fashion and/or at uniform intervals, wherein
- a current pressure spectrum is determined for each of the pressure measurements and the at least one part of the pressure spectrum is formed by averaging over the current pressure spectra of all pressure measurements of the at least one revolution.

14. The method as claimed in claim 13, **characterized in that**

- an angle position $\alpha$ of the rotor is captured with the rotation of the rotor, and
- each current pressure spectrum is multiplied by the cosine of the angle position a, cos(a), before averaging; in particular, the angle position $\alpha$ to this end is defined in such a way that it assumes a value of 0° when the relevant rotor blade is at the top, i.e., in the 12 o'clock position.

15. A wind power installation (100) having a rotor (106) with rotor blades (108) that are adjustable in terms of their angle of attack, comprising

- at least one sensor (30) for recording at least part of a pressure spectrum of a wall pressure at at least one of the rotor blades (108) at at least one measurement position, wherein the wind power installation (100) is prepared to carry out a method as claimed in any one of claims 1 to 14.


**Revendications**

1. Procédé d'évaluation d'une incidence de vent sur une pale de rotor (108) d'une centrale éolienne (100) comprenant les étapes :

- d'enregistrement d'au moins une partie d'un spectre de pression d'une pression (P), en particulier d'une pression de paroi sur la pale de rotor (108) dans au moins une position de mesure,
- de détermination d'au moins deux valeurs caractéristiques (P1, P2) à partir du spectre de pression,
- de formation d'une valeur indicatrice (I) à partir d'une relation des au moins deux valeurs caractéristiques (P1, P2) l'une par rapport à l'autre et
- d'évaluation en fonction de la valeur indicatrice (I) de la présence d'une incidence de vent (24) critique.

2. Procédé selon la revendication 1, **caractérisé en ce que**
les au moins deux valeurs caractéristiques (P1, P2) présentent une première valeur spectrale (P1) et une seconde valeur spectrale (P2) et

- la première valeur spectrale (P1) est une valeur caractéristique d'une plage de fréquence basse du spectre de pression et
- la seconde valeur spectrale (P2) est une valeur caractéristique d'une plage de fréquence haute du spectre de pression.

3. Procédé selon la revendication 1 ou 2, **caractérisé en ce que**

- le spectre de pression est réalisé en tant que spectre de densité de puissance ($G_{PP}(f)$) et dans
- un premier spectre de densité de puissance partielle est divisé dans une ou la plage de fréquence basse (42) et
- un second spectre de densité de puissance partielle est divisé dans une ou la plage de fréquence haute (44) et
- les au moins deux valeurs caractéristiques sont réalisées en tant que première et seconde part spectrale ($P_1$, $P_2$), dans lequel
- la première part spectrale ($P_1$) est formée par intégration du premier spectre de densité de puissance partielle sur la plage de fréquence basse et
- la seconde part spectrale ($P_2$) est formée par intégration du second spectre de densité de puissance partielle sur la plage de fréquence haute.

4. Procédé selon la revendication 2 ou 3, **caractérisé en ce que**

- la plage de fréquence basse (42) se trouve entre une fréquence inférieure et une fréquence médiane ($f_1$, $f_2$),

- la plage de fréquence élevée (44) se trouve entre la fréquence médiane et une fréquence supérieure ($f_2$, $f_3$) et

au moins une des fréquences inférieure, médiane et supérieure ($f_1$, $f_2$, $f_3$) est réglée selon au moins une prescription de réglage du tableau présentant :

- la fréquence médiane ($f_2$) est réglée de sorte que le spectre de densité de puissance présente un maximum dans la plage de fréquence basse (42) lorsqu'une incidence de vent (24) critique se présente,
- les fréquences inférieure, médiane et supérieure ($f_1$, $f_2$, $f_3$) sont réglées de sorte que la plage de fréquence basse (42) et la plage de fréquence élevée (44) soient de même grandeur,
- les fréquences inférieure, médiane et supérieure ($f_1$, $f_2$, $f_3$) sont réglées en fonction d'un degré de salissure de la pale de rotor (108),
- les fréquences inférieure, médiane et supérieure ($f_1$, $f_2$, $f_3$) sont réglées en fonction de valeurs limite d'émission sonore sur le lieu d'installation de la centrale éolienne (100),
- les fréquences inférieure, médiane et supérieure ($f_1$, $f_2$, $f_3$) sont réglées en fonction des mesures de son dans la zone de la centrale éolienne (100) et
- les fréquences inférieure, médiane et supérieure ($f_1$, $f_2$, $f_3$) sont réglées à des valeurs dans un intervalle de $\pm 50$ Hz de 200 Hz, 400 Hz ou 600 Hz.

5. Procédé selon l'une des revendications précédentes, **caractérisé en ce**

    - **que** la valeur indicatrice (I) est un quotient de deux des au moins deux valeurs caractéristiques ou de la première et de la seconde valeur spectrale ou de la première et de la seconde part spectrale ($P_1$, $P_2$) et
    - **qu'**il est évalué qu'une incidence de vent critique (24) se présente, lorsque la valeur indicatrice (I) se trouve au-dessus d'une valeur limite de rapport prescriptible (60).

6. Procédé selon l'une des revendications précédentes, **caractérisé en ce que** l'au moins une position de mesure est agencée

    - dans la zone d'un bord de fuite de pale de rotor (6) de la pale de rotor,
    - sur l'extrados (8) de la pale de rotor (108) et/ou
    - dans le sens longitudinal dans une plage de 60 % à 95 %, particulièrement de 75 % à 85 % d'une zone de raccord de la pale de rotor (108) jusqu'à une pointe de pale de la pale de rotor (108).

7. Procédé de commande d'une centrale éolienne (100) avec un rotor (106) avec au moins une pale de rotor (108) réglable dans son angle de pale, **caractérisé par** les étapes :

    - d'évaluation d'une mesure de pression sur au moins une pale de rotor (108) dans au moins une position de mesure,
    - d'évaluation en fonction de l'évaluation de la mesure de pression de la présence d'une incidence de vent (24) critique sur la pale de rotor (108) et
    - de réglage de la pale de rotor (108) dans son angle d'attaque, lorsqu'une incidence de vent (24) critique a été évaluée afin d'améliorer l'incidence de vent,
    dans lequel pour l'évaluation de la présence d'une incidence de vent critique (24), un procédé selon l'une des revendications 1 à 6 est utilisé.

8. Procédé selon la revendication 7, **caractérisé en ce que** le réglage de l'angle de pale est effectué de sorte qu'une ou la valeur indicatrice (I) diminue à nouveau sous une valeur limite ou la valeur limite de rapport (60).

9. Procédé selon la revendication 8, **caractérisé en ce qu'**un réglage de la pale de rotor (108) commence dans son angle d'attaque lorsqu'une incidence de vent (24) a été évaluée du fait que la valeur indicatrice (I) dépasse une valeur limite d'hystérèse supérieure, et le réglage est poursuivi jusqu'à ce que la valeur indicatrice (I) reste en dessous d'une valeur limite d'hystérèse inférieure qui est inférieure à la valeur limite d'hystérèse supérieure.

10. Procédé selon l'une des revendications 7 à 9, **caractérisé par** les étapes :

    - d'enregistrement d'une mesure de son sur la centrale éolienne (100),
    - d'évaluation de la mesure de son si un infrason se présente avec une amplitude supérieure à une valeur limite à infrason prescriptible et

- de modification d'au moins un réglage de fonctionnement de la centrale éolienne (100) lorsque l'évaluation de la mesure de son a montré que l'infrason se présente avec une amplitude supérieure à une valeur limite d'infrason prescriptible.

11. Procédé selon la revendication 10, **caractérisé en ce que** l'ajustement du réglage de fonctionnement comporte au moins un réglage à partir de la liste se composant

   - du réglage de la pale de rotor (100) dans son angle d'attaque afin d'améliorer l'incidence de vent,
   - de la modification, en particulier de la réduction, d'une vitesse de rotation de rotor et
   - de la modification, en particulier de la réduction, d'une puissance générée par la centrale éolienne.

12. Procédé selon l'une des revendications précédentes, **caractérisé en ce qu'**une modification de l'angle d'attaque de la pale de rotor (108) pour l'amélioration de l'incidence de vent est effectuée seulement lorsque la centrale éolienne (100) présente une vitesse de rotation de rotor supérieure à une vitesse de rotation limite prescriptible.

13. Procédé selon l'une des revendications précédentes, **caractérisé en ce que**

   - la pale de rotor est tournée avec un rotor de la centrale éolienne et
   - pour l'enregistrement d'au moins une partie du spectre de pression la pression est enregistrée par au moins une rotation, en particulier plusieurs rotations du rotor et
   - lors de chaque rotation plusieurs mesures de pression sont réalisées les unes après les autres, particulièrement régulièrement et/ou à intervalles réguliers, dans lequel
   - pour chacune des mesures de pression un spectre de pression momentané est déterminé et à partir des spectres de pression momentanés de toutes les mesures de pression l'au moins une rotation d'au moins une partie du spectre de pression est formée par une formation de valeur médiane.

14. Procédé selon la revendication 13, **caractérisé en ce que**

   - avec la rotation du rotor une position angulaire $\alpha$ du rotor est détectée et
   - chaque spectre de pression momentané est multiplié avant la formation de valeur médiane par le cosinus de la position angulaire $\alpha$, $\cos(\alpha)$, en particulier la position angulaire $\alpha$ est définie à cet effet de sorte qu'elle adopte la valeur 0° lorsque la pale de rotor concernée se trouve en haut, donc dans la position 12 heures.

15. Centrale éolienne (100) avec un rotor (106) avec des pales de rotor (108) réglables dans leur angle d'attaque comprenant

   - au moins un capteur (30) pour l'enregistrement d'au moins une partie d'un spectre de pression d'une pression de paroi sur au moins une des pales de rotor (108) dans au moins une position de mesure, dans laquelle la centrale éolienne (100) est préparée afin de réaliser un procédé selon l'une des revendications 1 à 14.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014210949 A1
- DE 202013007142 U1
- US 20020134891 A1
- EP 2180183 A1
- EP 2075462 A2